# FASCICULE DE BREVET EUROPEEN

(11) **EP 3 277 072 B1**
(45) Date de publication et mention de la délivrance du brevet: **06.03.2019**
(21) Numéro de dépôt: 16718392.0
(22) Date de dépôt: 17.03.2016
(51) Int. Cl.: A01G 3/037, A01G 3/02, A01G 3/053

(54) **DISPOSITIF DE MAINTIEN D'UNE LAME DE COUPE PIVOTANTE**
VORRICHTUNG ZUM HALTEN EINER SCHWENKSCHNEIDKLINGE
DEVICE FOR HOLDING A PIVOTING CUTTING BLADE

(30) Priorité: 01.04.2015 FR 1500655
(43) Date de publication de la demande: 07.02.2018
(73) Titulaire: PELLENC, 84120 Pertuis (FR)
(72) Inventeur: PELLENC, Roger, 84120 Pertuis (FR); GILBERT, Philippe, 13610 Le Puy Sainte Reparade (FR)
(74) Mandataire: Weber, Etienne Nicolas
(86) Numéro de dépôt international: PCT/FR2016/050598
(87) Numéro de publication internationale: WO 2016/156695

(56) Documents cités:
- FR-A1- 2 614 568
- FR-A3- 2 978 010

## Description

### Domaine technique

La présente invention concerne un dispositif de maintien d'une lame de coupe pivotante. Elle concerne également un outil de coupe équipé d'un tel dispositif. L'invention se rapporte de manière générale au domaine des têtes de coupe d'outils portatifs. Il s'agit notamment d'outils pour la taille de végétaux, par exemple des sécateurs, ou de cisailles électriques. L'invention trouve des applications également pour des outils de coupe actionnés à la main.

### Etat de la technique antérieure

L'état de la technique est décrit en référence aux sécateurs électriques. Les problèmes techniques rencontrés dans l'état de la technique ne sont toutefois pas limités aux sécateurs, qu'ils soient manuels ou assistés tels que des sécateurs hydrauliques ou pneumatiques, et peuvent se rencontrer avec d'autres outils comparables, tels que des cisailles à tôle par exemple, exerçant une action de coupe par l'intermédiaire d'une lame de coupe pivotante.

Il existe dans ce domaine un grand nombre d'outils possédant des têtes de coupe à lame pivotante. C'est le cas notamment des sécateurs électriques décrits dans les documents FR2614568 ou FR2935175. Ces sécateurs électriques présentent une structure générale sous la forme d'un carter intégrant un moteur électrique, une tête de coupe et une transmission reliant le moteur à la tête de coupe. Le terme « transmission » désigne ici l'ensemble des pièces qui transmettent le mouvement du moteur à la tête de coupe. Dans le cas des sécateurs électriques des documents mentionnés ci-dessus, la tête de coupe comprend une lame de coupe mobile et une contre-lame fixe, cette dernière étant communément appelée "crochet". La lame de coupe est montée sur un axe pivot principal et peut ainsi pivoter entre une position ouverte et une position refermée sur le crochet. La lame de coupe comporte aussi une queue de lame montée sur un axe pivot secondaire permettant de la relier à la transmission évoquée ci-dessus. La queue de la lame de coupe forme une came utilisée pour faire pivoter la lame. En effet, l'action exercée par la transmission au niveau de l'axe pivot secondaire produit un effet de levier permettant le pivotement de la lame de coupe autour de l'axe pivot principal. Dans la suite de la description, et par simplification, la queue de la lame de coupe est simplement désignée par "came".

L'axe pivot principal comporte un épaulement du côté du crochet et un filetage sur son extrémité opposée recevant un écrou frein. L'écrou frein peut éventuellement être associé à une rondelle de contrôle de jeu du côté de la lame de coupe. L'écrou-frein permet le serrage de la lame de coupe sur le crochet en incorporant un jeu de serrage. Le jeu de serrage peut être contrôlé le cas échéant par la rondelle de contrôle de jeu, de façon à effectuer des coupes de qualité. Cette rondelle de contrôle de jeu peut présenter à sa périphérie un moletage destiné à faciliter sa manipulation lors du réglage du jeu.

L'axe pivot secondaire comporte un épaulement à sa première extrémité et une gorge apte à recevoir un anneau élastique ou "clips" de retenue à sa deuxième extrémité. L'axe pivot secondaire associé au "clips" de retenue assure la liaison entre la transmission et la came de la lame de coupe. Le "clips" de retenue, en conjugaison avec l'épaulement, bloque la translation de l'axe pivot secondaire.

Lors d'un changement de lame, la méthode préconisée consiste à positionner la lame à mi-ouverture avant d'éteindre le sécateur et de le débrancher. Différents outils sont alors nécessaires, et notamment un tournevis pour déposer une trappe de visite donnant accès à l'axe pivot secondaire, une pince ou un outil spécifique pour enlever le "clips" de retenue et une clé appropriée pour desserrer puis dévisser complètement l'écrou frein de l'axe pivot principal. La rondelle de contrôle de jeu et les deux axes pivot sont alors déposés pour dégager la lame de coupe de la tête de coupe. Ces opérations sont ensuite reproduites dans un ordre inverse pour remonter une nouvelle lame de coupe.

Ainsi, lors d'un changement de lame, de nombreux outils sont nécessaires et l'opérateur doit faire preuve d'attention et de minutie à chaque instant pour manipuler et stocker les différentes pièces. Cette opération est encore plus délicate lorsqu'elle doit être réalisée en pleine nature, le plus souvent en plein hiver, période de taille des végétaux tels que la vigne et les arbres fruitiers. L'expérience montre que les opérateurs oublient souvent leurs outils et perdent des pièces lors d'un démontage de lame en pleine nature. Ces contraintes tendent à dissuader les opérateurs d'effectuer des changements de lame sur le terrain et occasionnent des retours tardifs d'outils en atelier.

Lors d'un réglage du jeu de serrage entre la lame de coupe et le crochet, il faut là aussi une clé pour desserrer ou resserrer l'écrou frein de façon à augmenter ou diminuer le jeu de serrage, tout en agissant le cas échéant sur la rondelle de contrôle de jeu pour contrôler le jeu de serrage entre lame et crochet. Cette opération est réalisée fréquemment sur le terrain, et ne peut être réalisée sans outil.

### Exposé de l'invention

L'invention propose un outil de coupe comprenant une tête de coupe avec une lame de coupe et une contre-lame et un dispositif de maintien de ladite lame de coupe ne présentant pas les difficultés mentionnées ci-dessus.

Un but de l'invention est en particulier de proposer un dispositif de maintien de lame permettant un changement de la lame de coupe de la tête de coupe sans outil.

Un but de l'invention est encore de proposer un dispositif de maintien de lame adapté à un changement de lame rapide sur le terrain, notamment pour des outils, tels que des sécateurs, utilisés pour la taille de végétaux.

Un autre but de l'invention est de proposer un dispositif de maintien de lame évitant la mise en oeuvre de pièces de petites tailles, difficiles à manipuler et susceptibles d'être perdues lors d'un démontage.

Enfin, un but de l'invention est de proposer un dispositif de maintien fiable, sans risque de desserrage, permettant, le cas échéant, une modification rapide et sans outil du jeu de serrage entre la lame de coupe et la contre-lame.

Pour atteindre ces buts, l'invention propose un dispositif de maintien d'une lame de coupe à came, comprenant un pivot de lame pour le montage pivotant de la lame autour de l'axe du pivot de lame sur un outil de coupe, et un pivot de came relié à un mécanisme d'entrainement de la lame. Un premier pivot, choisi parmi le pivot de lame et le pivot de came est pourvu d'un verrou axial à complémentarité de forme. Conformément à l'invention, l'autre pivot est pourvu d'un verrou axial à serrage manuel. Par ailleurs, le dispositif de maintien comprend un loquet présentant une première extrémité avec un pêne apte à être engagé sur le premier pivot par complémentarité de forme, pour former ledit verrou axial. Le loquet présente une deuxième extrémité apte à être engagée et maintenue sur le pivot pourvu du verrou axial à serrage manuel.

La complémentarité de forme entre le pêne et le premier pivot s'entend comme interdisant un déplacement axial du pêne, et donc du loquet, par rapport au premier pivot. Le pêne forme ainsi avec le premier pivot le verrou axial à complémentarité de forme. Il est maintenu en prise avec le premier pivot lorsque la deuxième extrémité du loquet est engagée sur le pivot pourvu du verrou axial à serrage manuel. La deuxième extrémité du loquet est essentiellement retenue par serrage au moyen du verrou axial à serrage manuel pour interdire son déplacement axial. Le verrou axial à serrage manuel peut aussi être mis à profit pour interdire un déplacement latéral du loquet.

On entend par lame de coupe pivotante une lame susceptible de pivoter, autour de l'axe du pivot de lame, entre une position dite "ouverte" et une position dite "fermée". La position ouverte permet d'engager un matériau à couper entre la lame et une contre-lame. Dans la position fermée, la lame est rabattue sur la contre-lame. Lors du mouvement de pivotement entre la position ouverte et la position fermée, le matériau à couper, par exemple un sarment de vigne, est sectionné. La contre-lame peut être pivotante ou fixe. Il s'agit, par exemple, d'une contre-lame fixe telle que le "crochet" mentionné en relation avec la description de l'état de la technique.

On entend par lame à came une lame pourvue d'une came qui la relie à un mécanisme d'actionnement. Il s'agit d'un mécanisme à actionnement motorisé ou manuel qui permet de provoquer le pivotement de la lame entre la position ouverte et fermée. La came peut être formée d'une seule pièce avec la lame ou peut être une pièce rapportée à la lame. Lorsqu'il s'agit d'une pièce rapportée, la came peut elle-aussi être montée pivotante autour de l'axe du pivot de lame et être solidarisée en mouvement avec la lame par l'intermédiaire d'un tenon fixe, par exemple. De préférence, la came est réalisée d'une seule pièce avec la lame, afin de réduire le nombre de pièces de la tête de coupe. Ceci est le cas notamment lorsque la came est formée par la queue de la lame de coupe d'un sécateur.

Le mécanisme d'actionnement de la lame peut comporter une transmission telle que décrite en relation avec l'état de la technique antérieure, avec un réducteur et un ensemble de vis-écrou à billes associé à des biellettes reliées à la came. Le mécanisme peut aussi comporter une poignée actionnable par l'utilisateur de l'outil.

Le mécanisme d'actionnement, ou des biellettes de ce mécanisme, sont reliés à la came par un pivot de came. Il s'agit, par exemple, d'un pivot à épaulement, ou d'un pivot dont l'une des extrémités est montée en force sur la came ou sur le mécanisme d'actionnement.

Le pivot de came, tout comme le pivot de lame sont pourvus d'un verrou axial. On entend par verrou axial un mécanisme, libérable, empêchant ou limitant un mouvement axial relatif entre le pivot et les pièces articulées sur le pivot. Le mouvement axial, s'entend ici comme un mouvement selon l'axe du pivot.

L'un des verrous axiaux, par exemple le verrou axial du pivot de came, est un verrou à complémentarité de forme. L'autre verrou axial, par exemple le verrou axial du pivot de lame, est un verrou axial à serrage manuel.

On entend par verrou axial à serrage manuel un verrou configuré pour être serré à la main contre les pièces à maintenir, sans avoir recours à un outil de serrage. Le serrage est de préférence un serrage à pas de vis. Un mécanisme de serrage à came ou un mécanisme de serrage mixte, à came et à pas de vis, peuvent également être envisagés. S'il s'agit d'un serrage à pas de vis, le verrou peut comporter un écrou venant en prise sur un filetage du pivot. Le verrou à serrage manuel peut notamment être pourvu d'un organe facilitant sa préhension ou son actionnement par la main de l'utilisateur. Il s'agit, par exemple, d'un écrou pourvu d'un moletage, d'un écrou à oreilles (écrou papillon), ou encore d'un levier d'actionnement d'une came de serrage. Bien entendu, le verrou axial à serrage manuel est aussi configuré pour être desserré à la main sans avoir recours à un outil de desserrage.

Comme indiqué ci-dessus, la fonction principale du verrou axial à serrage manuel est d'empêcher le mouvement axial relatif entre le pivot et les pièces qui y sont articulées. Il s'agit, par exemple, d'un déplacement axial de la lame sur le pivot de lame, et par rapport à la contre-lame. Il peut aussi s'agir d'un déplacement axial relatif entre le mécanisme d'actionnement, tel que des biellettes, relié à la came, la came elle-même, et le pivot de came.

Lorsque le verrou axial à serrage manuel équipe le pivot de lame il peut aussi avoir une fonction de réglage du jeu de serrage entre la lame et la contre-lame. Le pivot de lame est alors solidaire en rotation de la lame de coupe pour éviter tout desserrage intempestif du verrou axial de serrage par mouvement relatif avec la lame de coupe lors de son actionnement. Le verrou axial à serrage manuel peut être associé à une rondelle de contrôle de jeu, disposée à l'extrémité du pivot entre la lame et le verrou axial à serrage manuel, par exemple.

Comme indiqué ci-dessus, le verrou axial à complémentarité de forme, fait appel à un pêne solidaire du loquet, qui vient en prise sur le pivot par complémentarité de forme lorsque le loquet est mis en place et lorsque la deuxième extrémité du loquet est engagée sur le pivot pourvu du verrou axial à serrage manuel. Le pêne peut se présenter sous la forme d'un rail, d'une rainure, d'un tenon, d'une clavette, d'une fourche et plus généralement d'une pièce mécanique quelconque, de forme ajustée sur une pièce de réception complémentaire au voisinage de l'extrémité du pivot. La complémentarité de forme entre le pivot au voisinage de son extrémité et le pêne réalisent le verrouillage mécanique qui interdit ou pour le moins limite le déplacement axial entre le pivot et les pièces qu'il maintient.

Dans une réalisation particulière du verrou axial à complémentarité de forme celui-ci peut être pourvu d'une gorge pratiquée au voisinage de l'extrémité du pivot correspondant. Dans ce cas, le pêne peut être formé par un bord d'un ajourage de la première extrémité du loquet.

Pour faciliter le verrouillage d'un tel verrou axial, l'ajourage peut présenter une première partie suffisamment large pour le passage du pivot, et une deuxième partie plus resserrée, en communication avec la première partie de l'ajourage, et ajustée sur le fond de la gorge du pivot. Le loquet est alors configuré pour engager la deuxième partie de l'ajourage dans la gorge lorsque la deuxième extrémité du loquet est engagée sur l'autre pivot, pourvu du verrou axial à serrage manuel.

La deuxième extrémité du loquet peut comporter, par exemple, une fourche, une bride, un anneau ou plus simplement un ajourage avec un diamètre adapté au pivot pourvu du verrou axial à serrage manuel. Lorsqu'elle comprend un anneau ou un ajourage engagé sur le pivot, le pivot empêche son déplacement latéral. Le déplacement axial du loquet sur le pivot est empêché par le verrou axial à serrage manuel. Ce même verrou peut aussi servir à empêcher le déplacement latéral. La rotation de la deuxième extrémité du loquet autour de son pivot peut rester libre.

Le verrou axial à serrage manuel peut être associé à une rondelle de contrôle de jeu.

Afin de sécuriser le maintien de la lame de coupe avec un jeu de serrage contrôlé avec la contre-lame, le verrou axial à serrage manuel peut comprendre un écrou et un dispositif de blocage de l'écrou.

Le dispositif de blocage de l'écrou peut être solidaire du corps de l'outil. Toutefois, il s'agit, de préférence d'un dispositif de blocage solidaire du loquet. Il vient en prise avec l'écrou de manière à empêcher sa rotation, notamment lorsque le loquet est correctement engagé sur les pivots de lame et de came.

Afin de faciliter le serrage mais aussi la dépose de l'écrou, le dispositif de blocage de l'écrou peut être pourvu d'un mécanisme de libération temporaire.

Dans une réalisation particulière du verrou axial à serrage manuel, celui-ci peut comporter un écrou moleté ou cranté.

Le dispositif de blocage peut comporter une lame flexible reliée au loquet et pourvue d'au moins un ergot en une extrémité libre. Dans une position de repos de la lame flexible, l'ergot est en prise avec un moletage ou un crantage de l'écrou et empêche la rotation de l'écrou. Dans une position de libération, susceptible d'être occupée sous une contrainte de flexion exercée par un doigt de l'utilisateur, l'ergot est distant du moletage ou du crantage, et n'entrave pas la rotation de l'écrou.

L'invention concerne également un outil de coupe comprenant une lame de coupe pivotante, montée sur un pivot de lame, et comprenant un mécanisme d'actionnement de la lame de coupe connecté à une came de la lame de coupe par l'intermédiaire d'un pivot de came. Conformément à l'invention, le maintien de la lame de coupe est assuré par un dispositif de maintien tel que décrit ci-dessus.

D'autres caractéristiques et avantages de l'invention ressortent de la description qui suit, en référence aux figures des dessins annexés. Cette description a trait à un sécateur motorisé. Elle est donnée à titre purement illustratif et non limitatif.

### Brève description des figures

La figure 1 est une perspective d'une tête de coupe d'un sécateur électrique de type connu.
La figure 2 est une perspective d'une tête de coupe d'un sécateur électrique conforme à l'invention.
La figure 3 est un éclaté à plus grande échelle et en perspective d'un dispositif de maintien de lame conforme à l'invention, équipant le sécateur de la figure 2.
La figure 4 est une perspective d'un loquet de verrouillage du dispositif de maintien de lame.
La figure 5 est une perspective d'une partie du dispositif de maintien de lame de la figure 3 illustrant le fonctionnement d'un dispositif de blocage d'écrou.

### Description détaillée de modes de mise en oeuvre de l'invention

Des parties identiques ou similaires des différentes figures sont repérées avec les mêmes signes de référence de sorte que l'on puisse se reporter d'une figure à l'autre.

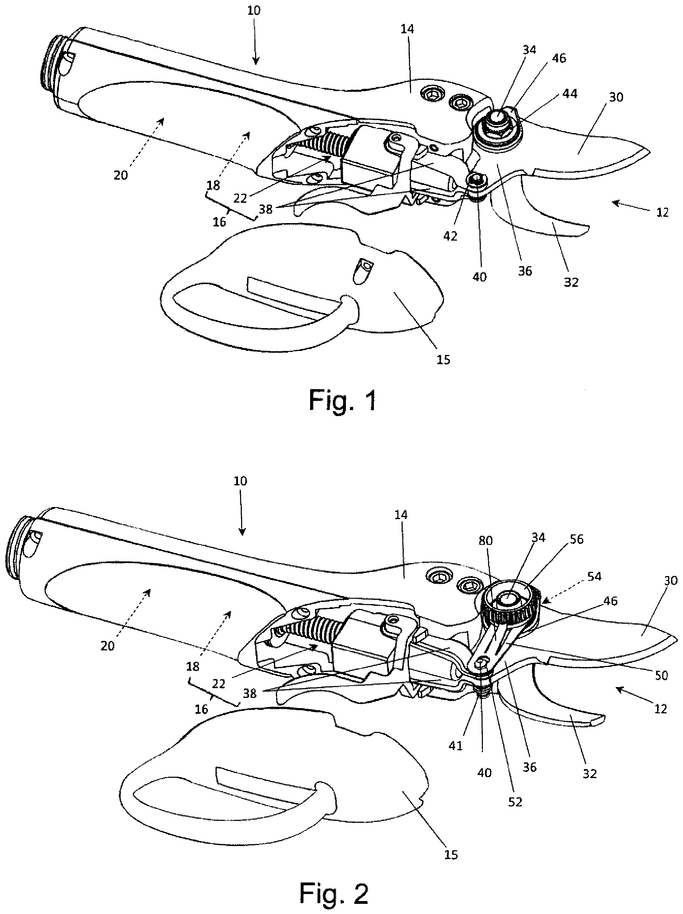

La figure 1 représente une tête de coupe 12 d'un sécateur 10 de type connu. Le sécateur 10 comprend un carter 14, intégrant un moteur électrique 20, caché par le carter 14, une tête de coupe 12, et une transmission 16. La transmission relie le moteur à la tête de coupe 12. Le terme « transmission » désigne ici l'ensemble des pièces qui transmettent le mouvement du moteur à la tête de coupe. La transmission 16 peut comporter notamment un réducteur 18, monté sur l'arbre de sortie d'un moteur électrique 20, et un mécanisme de vis-écrou à billes 22 entraîné par le réducteur, et des biellettes 38 décrites plus loin. Sur la figure 1, le moteur et le réducteur sont cachés par le carter 14. Un capot 15 donnant accès à la transmission est retiré de manière à montrer le mécanisme de vis-écrou à billes 22. Le mécanisme de vis-écrou à bille 22 est formé d'une vis et d'un écrou qui coopèrent mutuellement par l'intermédiaire de billes circulant dans un chemin de billes. Le chemin de billes est formé par des filets complémentaires de l'écrou et de la vis. Le mouvement de rotation de la vis provoque ainsi une translation de l'écrou le long de la vis et parallèlement à l'axe de la vis. Le sens du déplacement de l'écrou est fonction du sens de rotation de la vis. Le mouvement de translation de l'écrou est utilisé pour entraîner la tête de coupe 12. La tête de coupe 12 comprend une lame de coupe pivotante 30 et une contre-lame fixe 32 encore appelée "crochet". La lame de coupe 30 est montée sur un pivot de lame 34 et peut ainsi pivoter entre une position ouverte et une position refermée sur le crochet 32. La lame de coupe 30 comporte aussi une came 36, formé d'une seule pièce avec la lame. La came 36 est relié à l'écrou du mécanisme de vis-écrou à billes 22 par l'intermédiaire des biellettes 38. Les biellettes 38 s'articulent sur la came autour d'un pivot de came 40. Plus précisément, une biellette est prévue de chaque côté de la came.

L'action exercée par la transmission sur la came 36, par l'intermédiaire du pivot de came 40, permet le pivotement de la lame de coupe 30 autour du pivot de lame 34. Le pivot de came 40 est, dans l'exemple de la figure 1, un axe épaulé. L'épaulement se situe contre la biellette tournée vers le crochet 32. L'épaulement sert de butée limitant la translation axiale dans la liaison des biellettes 38 avec la came 36. On peut noter ici que l'épaulement pourrait tout aussi bien se trouver contre la biellette opposée au crochet.

La deuxième extrémité du pivot de came 40 comporte une gorge. Après montage du pivot de came dans la came et les biellettes, un anneau élastique 42 ou "clips" est mis en place dans la gorge. L'effet conjugué de l'épaulement et du "clips" bloque ainsi tout retrait intempestif du pivot de came. L'anneau élastique ou clips constitue avec la gorge du pivot de came 40 un verrou axial à complémentarité de forme.

Le pivot de lame 34 est lui aussi un axe épaulé du côté du crochet. Sa deuxième extrémité est filetée pour recevoir un écrou de serrage 44, ici un écrou freiné. Le pivot de lame 34 reçoit également, du côté de la lame de coupe 30, une rondelle de contrôle de jeu 46.

La rondelle de contrôle de jeu 46, est destinée plus précisément à contrôler le jeu de serrage de la lame. Dans le type de tête de coupe tel que représenté à la figure 1, on prévoit un gauchissement de la zone de coupe entre la lame et la contre-lame formant le "crochet" de façon à assurer une coupe avec effet de ciseaux pour assurer une coupe fine. En position ouverte ou en position fermée de la lame de coupe, il n'y a pas de jeu entre la lame de coupe et le crochet au niveau du pivot de lame 34. La rotation de la rondelle de contrôle de jeu est alors difficile voire impossible par action d'un doigt sur la périphérie de la rondelle. Par contre, en position intermédiaire entre la position ouverte et la position fermée, le gauchissement de la zone de coupe engendre un jeu au niveau du pivot de lame 34. Ce jeu est perceptible par une mise en rotation aisée de la rondelle de réglage de jeu autour du pivot.

Pour régler le serrage, on préconise de positionner la lame à mi-ouverture et de serrer l'écrou jusqu'à ce que des efforts soient nécessaires pour faire tourner la rondelle de contrôle de jeu autour du pivot. Ladite rondelle sert ainsi de repère et de contrôle dans le réglage du jeu. L'opérateur peut ainsi régler finement le jeu de serrage en jouant sur la facilité de rotation de la rondelle autour du pivot quand l'écrou est serré. Dans l'exemple de la figure 1, la rondelle de contrôle de jeu présente sur une partie de sa périphérie un moletage destiné à faciliter sa manipulation pendant le contrôle du jeu de serrage, ladite partie moletée étant orientée de façon à ce que sa manipulation soit aisée par un doigt de la main d'un opérateur.

Le démontage de la lame pivotante 30 du sécateur 10 nécessite les opérations suivantes:
- positionner la lame à mi-ouverture avant d'éteindre le sécateur et de le débrancher
- déposer au moyen d'un tournevis une trappe de visite du carter découvrant l'accès au pivot de came 40.
- déposer le "clips" 42 au moyen d'un outil spécifique,
- desserrer et dévisser l'écrou de serrage 44 au moyen d'une clé spécifique.
- retirer manuellement la rondelle de contrôle de jeu moletée 46 et les deux pivots 34, 40 pour libérer la lame 30.

Outre le fait que ces opérations nécessitent un outillage, elles requièrent également de la minutie au regard de la taille de certaines pièces telles que le "clips" 42, voire les vis de fixation de la trappe de visite sur le carter. Comme mentionné précédemment, ces contraintes rendent l'opération de changement de lame difficile, voire impossible, en pleine nature, par exemple dans une vigne lors d'une journée de taille hivernale.

La figure 2 montre un sécateur pourvu d'un dispositif de maintien de lame conforme à l'invention et facilitant le changement de lame. Le sécateur de la figure 2 présente un certain nombre de pièces ou de parties similaires ou identiques au sécateur de la figure 1, et repérés avec les mêmes signes de référence. Dans un souci de simplification, la description de ces parties n'est pas reprise ici, sachant que l'on peut se reporter à la figure 1.

Sur la figure 2 un capot 15 donnant accès à une partie de la transmission 16 est montré dans une position retirée. Lorsque le capot est en place sur le carter 10, il y est fixé par un mécanisme à emboîtement ou un mécanisme à charnière et emboîtement non représenté. Il peut aussi y être fixé au moyen d'ergots flexibles, par des vis moletées ou par tout moyen de maintien approprié, susceptible d'être engagé et libéré sans outil.

On peut observer, sur la figure 2, la présence d'un loquet 50 qui relie le pivot de came 40 au pivot de lame 34. Le loquet 50, ou tout au moins une première extrémité 52 du loquet forme avec l'extrémité du pivot de came 40 un verrou axial à complémentarité de forme. Le loquet coopère en effet avec l'extrémité du pivot de came 40 de manière à empêcher ou tout au moins limiter un mouvement axial du pivot de came par rapport à la came 36 et par rapport aux biellettes 38.

Le mouvement axial du pivot de came est également limité sur son extrémité opposée par un épaulement 41 tel que décrit en référence à la figure 1. Dans d'autres réalisations non représentées, par exemple lorsqu'une unique biellette est utilisée, le pivot de came peut être monté en force sur la came ou sur la biellette et être dépourvu de l'épaulement.

Contrairement au "clips" 42 de la figure 1, qui est maintenu sur le pivot de came par déformation élastique, le loquet 50 est principalement maintenu par l'intermédiaire de sa deuxième extrémité 54. Celle-ci est en effet retenue sur le pivot de lame par serrage. L'engagement du loquet sur le pivot de came est décrit plus en détail dans suite de la description.

On observe également sur la figure 2 que l'écrou de serrage 44 de la figure 1 peut être remplacé par un écrou de serrage moleté 56, qui vient prendre place sur l'extrémité filetée du pivot de lame. Le principal avantage d'un écrou moleté par rapport à l'écrou à six pans visible sur la figure 1 est qu'il ne nécessite pas d'outil pour son serrage, le moletage permettant une préhension manuelle aisée de l'écrou pour exercer les efforts de serrage ou de desserrage. Une autre fonction du moletage de l'écrou est décrite en référence aux figures suivantes.

L'écrou moleté forme avec l'extrémité filetée du pivot de lame un verrou axial à serrage manuel.

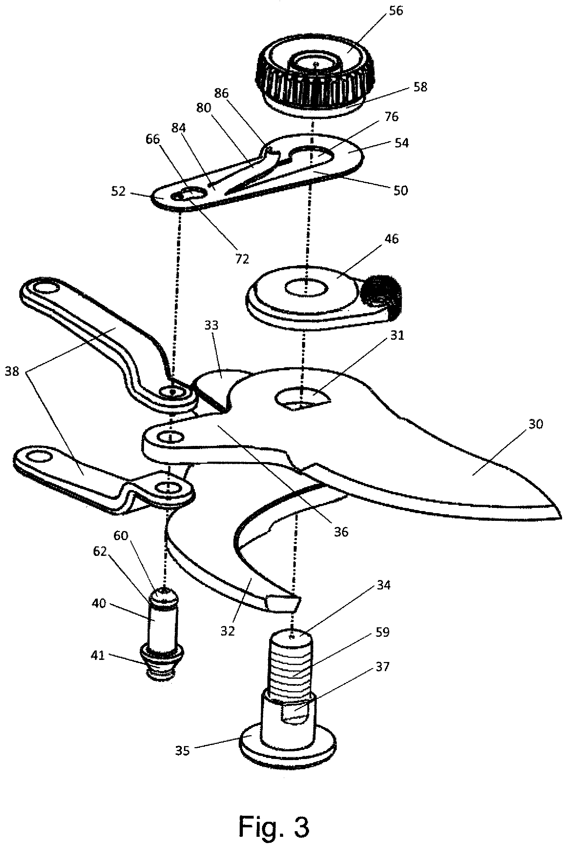

La figure 3 montre à plus grande échelle différents composants du dispositif de maintien de lame conforme à l'invention. Sur la figure 3 le pivot de lame 34 est retiré de la lame de coupe 30 et de la contre-lame 32. Ceci permet de mieux distinguer un épaulement 35 du pivot de lame 34 qui vient en appui sur la face de la contre-lame 32 opposée à la lame de coupe 30. On observe également que l'extrémité libre du pivot de lame 34 présente un filetage 59. Ce filetage est adapté à l'écrou de serrage moleté 56. Le pivot vient prendre place dans un trou de passage 31 de la lame de coupe 30 et de la contre-lame 32. La fixation de la tête de coupe formée par la lame de coupe 30 et la contre-lame 32 sur le corps de l'outil se fait par l'intermédiaire d'une patte de fixation 33 de la contre-lame. Un méplat ou un relief 37 sont pratiqués axialement sur la broche du pivot de lame 34. Ils coopèrent avec un profil conjugué du trou de passage de la lame de coupe 30, et permettent de rendre solidaires en rotation le pivot de lame 34 et la lame de coupe 30. Cette mesure favorise le blocage de l'écrou de serrage moleté 56 décrit plus loin, le réglage du jeu de serrage entre la lame et la contre-lame, et évite un desserrage du pivot de lame dans l'écrou de serrage moleté 56 sous l'effet du mouvement de la lame de coupe lors d'efforts de coupe répétés.

La figure 3 représente également le pivot de came 40 à plus grande échelle. On peut distinguer en particulier un épaulement 41 du pivot de came qui vient en appui sur l'une des biellettes 38. Comme le montre la figure 3, l'extrémité du pivot formant l'épaulement 41 est conformée pour une préhension du pivot à la main. Elle constitue un petit appendice de saisie du pivot et contribue à faciliter une opération de changement de lame sans outil, tout en réduisant le risque de perdre les pièces. Le pivot de came passe par des trous de passage d'une première biellette 38, de la came 36, puis d'une deuxième biellette 38, en partant de l'épaulement 41.

La figure 3 montre que l'extrémité du pivot de came 40 passe également par un ajourage 66 pratiqué en la première extrémité 52 du loquet 50, et adapté au diamètre du pivot. Un chanfrein 60, à l'extrémité libre du pivot de came, est prévu pour faciliter son introduction à travers l'ajourage 66.

La figure 3 montre encore que le pivot de came 40 est pourvu d'une gorge 62 au voisinage de son extrémité. Or, l'ajourage 66 du loquet 50 présente une partie resserrée ajustée au diamètre du pivot de came 40 au fond de la gorge. Cette partie resserrée est délimitée par un rebord 72, formant pêne, qui vient s'engager dans la gorge 62 du pivot de came lorsque le loquet 50 est poussé en direction du trou de passage 31 du pivot de lame 34.

La deuxième extrémité 54 du loquet présente également un ajourage 76, dimensionné pour le passage du pivot de lame. Le loquet est dimensionné de telle manière que le rebord 72 de l'ajourage 66 de la première extrémité 52 du loquet est entièrement engagée dans la gorge 62 du pivot de came lorsque l'ajourage 76 de la deuxième extrémité 54 coïncide avec le trou de passage 31 de la lame de coupe 30 et de la contre-lame 32. Le loquet 50 est maintenu dans cette position dès que le pivot de lame 34 est engagé à travers l'ajourage 76 de la deuxième extrémité 54.

Le rebord périphérique 72 de l'ajourage de la première extrémité 52 du loquet constitue un pêne qui coopère avec la gorge 62 du pivot de came pour former un verrou axial par complémentarité de forme. Ce verrou limite ou empêche un mouvement axial du pivot de came 40 par rapport aux biellettes 38 et par rapport à la came 36 de la lame de coupe 30.

On peut encore observer sur la figure 3 que le loquet 50 ne vient pas directement en appui sur la lame de coupe 30 mais sur une rondelle de contrôle de jeu 46. La rondelle de contrôle de jeu 46 est prévue pour contrôler un jeu de serrage de la manière décrite en référence avec la figure 1.

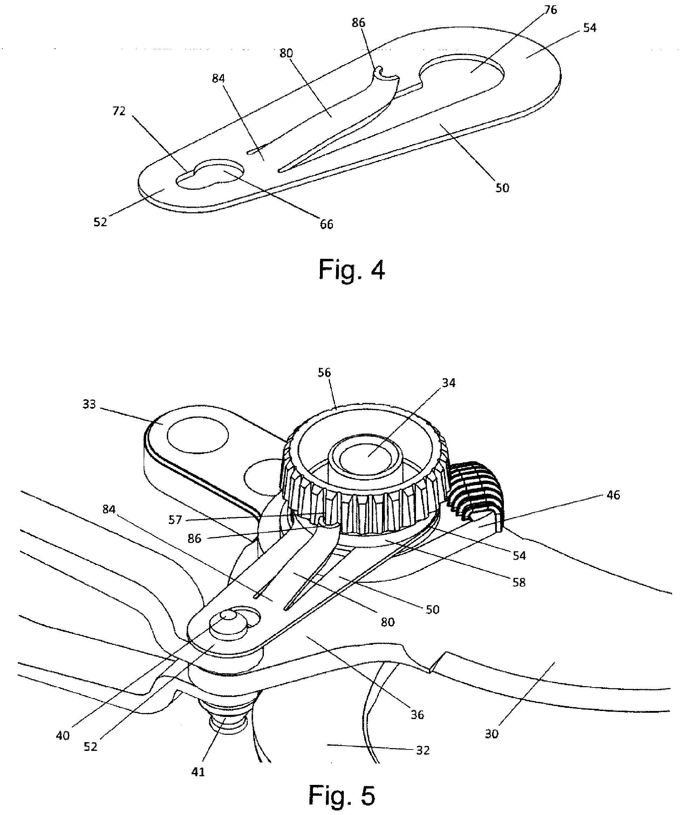

La figure 4 montre à plus grande échelle le loquet 50 utilisé pour verrouiller le pivot de came. On distingue l'ajourage 66 pratiqué au voisinage de la première extrémité 52 du loquet, pour le passage du pivot de came et l'ajourage 76 pratiqué au voisinage de la deuxième extrémité 54 du loquet pour le passage du pivot de lame 34. L'ajourage 76 de la deuxième extrémité du loquet est pour l'essentiel circulaire. Elle présente un rebord, formant une sorte de rondelle d'appui en regard de la face d'appui de l'écrou moleté non représenté.

On peut observer que l'ajourage 66 de la première extrémité 52 du loquet présente une partie resserrée. Comme indiqué plus haut, elle est ajustée sur le fond de la gorge du pivot de came, non représenté. Le rebord de l'ajourage dans cette partie resserrée, constitue le pêne de verrouillage.

On note également sur la figure 4 la présence, sur le loquet 50, d'une lame flexible 80 reliée au corps du loquet 50 par l'une de ses extrémités 84. L'extrémité opposée de la lame flexible 80 est libre. Elle est pourvue d'un ergot 86. La lame flexible 80, ou tout au moins son extrémité 84 reliée au corps du loquet 50 lui confère une élasticité suffisante pour être fléchie par une pression exercée par le doigt d'un utilisateur. La flexion de la lame 80 permet de modifier la hauteur de l'ergot, par rapport au rebord de l'ajourage 76 de la deuxième extrémité 54 du loquet 50.

Le loquet tel que représenté à la figure 4 est de préférence une pièce métallique. Elle peut être formée par emboutissage. Sa longueur, et plus précisément la distance qui sépare le pêne 72 en sa première extrémité et l'ajourage 76 en sa deuxième extrémité, est fixée en fonction d'une distance séparant le pivot de lame et le pivot de came. Cette dernière distance est encore fixée par les trous de passage correspondants de la lame de coupe.

La lame flexible 80, et l'ergot 86 forment un dispositif de blocage et de retenue de l'écrou de serrage moleté 56 comme le montre la figure 5.

La figure 5 montre le dispositif de maintien d'une lame de coupe de la figure 5 dans une configuration où la lame est montée. Le pivot de lame 34 est engagé dans la contre-lame 32, la lame de coupe 30, et la rondelle de contrôle de jeu 46. L'écrou de serrage moleté 56 est vissé sur le pivot de lame. La première extrémité 52 du loquet 50 est en prise sur le pivot de came 40 et la deuxième extrémité 54 du loquet est serrée entre l'écrou de serrage moleté 56 et la rondelle de contrôle de jeu 46. On peut noter ici que l'épaisseur de la rondelle de réglage de jeu correspond sensiblement à l'épaisseur de la biellette 38 du côté de la lame de sorte que le loquet 50 est positionné de façon sensiblement parallèle à la face de lame de coupe. La base du loquet 50 est dans ce cas inscrite dans un plan. D'autres formes du loquet sont toutefois envisageables, par exemple, en cas d'absence de la rondelle de contrôle de jeu ou pour d'autres configurations de la tête de coupe. Par exemple, le loquet peut avoir une forme adaptée pour que son extrémité 54 puisse venir en contact directement avec la lame de coupe. La rondelle de contrôle de jeu, ou tout dispositif analogue, peut ainsi être positionné entre le loquet et l'écrou de serrage.

On peut observer que la longueur de la lame flexible 80 du loquet 50 est telle que l'ergot 86 atteint l'écrou de serrage moleté 56. La lame flexible 80 est représentée dans une position de repos dans laquelle l'ergot vient en prise sur un relief 57 du moletage de l'écrou de serrage 56. La lame et l'ergot interdisent ainsi la rotation de l'écrou, et évitent son desserrage accidentel.

Lorsque l'utilisateur applique une pression sur la lame flexible 80, en direction de la lame de coupe 30, la lame vient occuper une position de libération dans laquelle l'ergot se trouve désengagé du relief du moletage. La vis de serrage moletée 56 présente en effet, sur une partie de sa hauteur, un bord périphérique 58 dépourvu de moletage et en retrait dudit moletage. Ce bord est tourné vers le loquet 50.

La flexibilité de la lame flexible 80 et le bord périphérique 58 dépourvu de moletage constituent un mécanisme de libération du blocage de l'écrou de serrage moleté 56. Il est actionné pour libérer l'écrou lors de sa mise en place, de son retrait ou lors d'un ajustement du serrage.

La figure 5 permet également de mieux voir la patte de fixation 33 de la contre lame 32. Elle présente des trous de passage pour des vis de fixation. Il convient de souligner que les vis de fixation, non représentées, ne sont en aucun cas déposées pour un changement de la lame de coupe 30.

Grâce au dispositif de l'invention, le montage et le démontage de la lame de coupe est largement facilité et peut être réalisé entièrement à la main. Il comprend :
- la mise en place de la première extrémité du loquet sur le pivot de came,
- un léger glissement du loquet pour engager le pêne sur le pivot de came et pour faire coïncider l'ajourage de la deuxième extrémité du loquet avec le trou de passage du pivot de lame, tout en libérant le dispositif de blocage de l'écrou de serrage moleté,
- la mise en place du pivot de lame et le serrage de l'écrou de serrage moleté sur ce pivot.
- le relâchement du dispositif de blocage de l'écrou de serrage, empêchant ainsi la rotation relative de l'écrou de serrage par rapport à la lame de coupe, et fixant ainsi le jeu de serrage entre la lame de coupe et la contre-lame.

## Revendications

1. Dispositif de maintien d'une lame de coupe (30) à came (36), comprenant un pivot de lame (34) pour le montage pivotant de la lame de coupe (30) sur un outil de coupe (10), et un pivot de came (40) relié à un mécanisme d'entrainement de la lame (16, 38), un premier pivot choisi parmi le pivot de lame (34) et le pivot de came (40) étant pourvu d'un verrou axial à complémentarité de forme, **caractérisé en ce que**:
- l'autre pivot est pourvu d'un verrou axial à serrage manuel,
- le dispositif comprend un loquet (50) présentant une première extrémité (50) avec un pêne (72) apte à être engagé et maintenu sur le premier pivot par complémentarité de forme, pour constituer ledit verrou axial à complémentarité de forme, et une deuxième extrémité (54) apte à être engagée et maintenue sur le pivot pourvu du verrou axial à serrage manuel.

2. Dispositif selon la revendication 1, dans lequel le verrou axial à serrage manuel comprend un écrou de serrage (56) et un dispositif (80, 86) de blocage de l'écrou de serrage.

3. Dispositif selon la revendication 2 dans lequel le dispositif de blocage de l'écrou de serrage est solidaire du loquet (50).

4. Dispositif selon l'une des revendications 2 ou 3 dans lequel le dispositif de blocage de l'écrou présente un mécanisme de libération temporaire à lame flexible (80) pour la dépose de l'écrou de serrage (56).

5. Dispositif selon l'une des revendications 2 à 4 dans lequel l'écrou de serrage (56) est un écrou moleté ou cranté.

6. Dispositif selon la revendication 5, dans lequel le dispositif de blocage comprend une lame flexible (80) reliée au loquet (50) et pourvue d'au moins un ergot (86) en une extrémité libre, la lame flexible présentant une position de repos dans laquelle l'ergot est en prise avec un moletage (57) de l'écrou de serrage, et une position de libération, susceptible d'être occupée sous une contrainte de flexion, dans laquelle l'ergot est distant du moletage.

7. Dispositif selon l'une quelconque des revendications précédentes, dans lequel le premier pivot, pourvu du verrou axial à complémentarité de forme, comprend un gorge (62) pratiquée au voisinage d'une extrémité du pivot, et dans lequel le pêne, adapté à coopérer avec la gorge (62), est formé par un rebord (72) d'un ajourage (66) pratiqué dans le loquet (50) au voisinage de sa première extrémité (52).

8. Dispositif selon la revendication 7, dans lequel l'ajourage (66) présente une première partie suffisamment large pour le passage du pivot, et une deuxième partie, en communication avec la première partie de l'ajourage, et ajustée sur le fond de la gorge (62) du pivot, la deuxième partie de l'ajourage étant configurée pour s'engager sur la gorge du pivot lorsque la deuxième extrémité du loquet (54) est engagée sur le pivot pourvu de verrou axial à serrage manuel.

9. Dispositif selon l'une quelconque des revendications précédentes, dans lequel le pivot de lame (34) est pourvu du verrou axial à serrage manuel et dans lequel le pivot de came (40) est pourvu du verrou axial à complémentarité de forme.

10. Outil de coupe, comprenant une lame pivotante (30) montée sur un pivot de lame (34) et un mécanisme d'actionnement (16, 38) de la lame de coupe (30) connecté à une came (36) de la lame de coupe (30) par l'intermédiaire d'un pivot de came (40), **caractérisé par** un dispositif de maintien de la lame selon l'une quelconque des revendications précédentes.

## Patentansprüche

1. Vorrichtung zum Halten einer Schneidklinge (30) mit einer Nocke (36), umfassend einen Klingenschwenkzapfen (34) zum schwenkbaren Montieren der Schneidklinge (30) an einem Schneidwerkzeug (10) und einen Nockenschwenkzapfen (40), der mit einem Antriebsmechanismus der Klinge (16, 38) verbunden ist, wobei ein erster Schwenkzapfen, der zwischen dem Klingenschwenkzapfen (34) und dem Nockenschwenkzapfen (40) ausgewählt ist, mit einem formschlüssigen axialen Schloss ausgestattet ist, **dadurch gekennzeichnet, dass**:
- der andere Schwenkzapfen mit einem axialen Schloss zur manuellen Verriegelung ausgestattet ist,
- die Vorrichtung eine Klinke (50) umfasst, die einen ersten Endabschnitt (50) mit einem Riegel (72), der dazu in der Lage ist, durch Formschlüssigkeit in den ersten Drehzapfen einzugreifen und darauf gehalten zu werden, um das formschlüssige axiale Schloss zu bilden, und einen zweiten Endabschnitt (54) aufweist, der dazu in der Lage ist, in den Drehzapfen, der mit dem axialen Schloss zur manuellen Verriegelung ausgestattet ist, einzugreifen und darauf gehalten zu werden.

2. Vorrichtung nach Anspruch 1, wobei das axiale Schloss zur manuellen Verriegelung eine Spannmutter (56) und eine Vorrichtung (80, 86) zum Sperren der Spannmutter umfasst.

3. Vorrichtung nach Anspruch 2, wobei die Vorrichtung zum Sperren der Spannmutter einstückig mit der Klinke (50) ist.

4. Vorrichtung einem der Ansprüche 2 oder 3, wobei die Vorrichtung zum Sperren der Spannmutter einen Mechanismus zum vorläufigen Freigeben einer flexiblen Klinge (80) zum Ablegen der Spannmutter (56) aufweist.

5. Vorrichtung nach einem der Ansprüche 2 bis 4, wobei die Spannmutter (56) eine Überwurfmutter oder eine verzahnte Mutter ist.

6. Vorrichtung nach Anspruch 5, wobei die Sperrvorrichtung eine flexible Klinge (80) umfasst, die mit der Klinke (50) verbunden und an einem freien Ende mit mindestens einer Nase (86) ausgestattet ist, wobei die flexible Klinge eine Rastposition aufweist, bei der die Nase mit einer Rändelung (57) der Spannmutter in Eingriff steht, und einer Freigabestellung, die unter einer Biegebeanspruchung eingenommen werden kann, bei der die Nase von der Rändelung entfernt ist.

7. Vorrichtung nach einem der vorangehenden Ansprüche, wobei der erste Schwenkzapfen, ausgestattet mit einem formschlüssigen axialen Schloss, eine Nut (62) umfasst, die in der Nähe eines Endabschnitts des Schwenkzapfens ausgebildet ist, und wobei der Riegel, der zum Zusammenwirken mit der Nut (62) ausgelegt ist, von einem Rand (72) einer Öffnung (66) gebildet wird, die in der Klinke (50) in der Nähe ihres ersten Endabschnitts (52) ausgebildet ist.

8. Vorrichtung nach Anspruch 7, wobei die Öffnung (66) einen ersten Abschnitt aufweist, der groß genug für den Durchlass des Schwenkzapfens ist, und einen zweiten Abschnitt, der mit dem ersten Abschnitt der Öffnung in Kommunikation steht, und auf dem Boden der Nut (62) des Schwenkzapfens justiert ist; wobei der zweite Abschnitt der Öffnung dazu konfiguriert ist, in die Nut des Schwenkzapfens einzugreifen, wenn der zweite Endabschnitt der Klinke (54) mit dem Schwenkzapfen in Eingriff steht, der mit dem axialen Schloss zur manuellen Verriegelung ausgestattet ist.

9. Vorrichtung nach einem der vorangehenden Ansprüche, wobei der Klingenschwenkzapfen (34) mit dem axialen Schloss zur manuellen Verriegelung ausgestattet ist, und wobei der Nockenschwenkzapfen (40) mit dem formschlüssigen axialen Schloss ausgestattet ist.

10. Schneidwerkzeug, umfassend eine Schwenkklinge (30), die an einem Klingenschwenkzapfen (34) montiert ist, und einen Antriebsmechanismus (16, 38) der Schneidklinge (30), der mit einer Nocke (36) der Schneidklinge (30) über einen Nockenschwenkzapfen (40) verbunden ist, **gekennzeichnet durch** eine Haltevorrichtung der Klinge nach einem der vorangehenden Ansprüche.

## Claims

1. A holding device for a cutting blade (30) with a cam (36), comprising a blade pivot (34) for pivotal mounting of the cutting blade (30) to a cutting tool (10), and a cam pivot (40) connected to a blade drive mechanism (16, 38), a first pivot selected from the blade pivot (34) and the cam pivot (40) being provided with an axial lock of complementary shape,
**characterised in that**:
- the other pivot is provided with an axial lock with manual tightening, and
- the device comprises a latch (50) having a first end (50) with a bolt (72) capable of being engaged and held on the first pivot by its complementary shape, to constitute said axial lock of complementary shape, and a second end (54) capable of being engaged and held on the pivot provided with the axial lock with manual tightening.

2. A device according to claim 1 wherein the axial lock with manual tightening includes a tightening nut (56) and a blocking device (80, 86) for the tightening nut.

3. A device according to claim 2 wherein the blocking device for the tightening nut is fixed with respect to the latch (50).

4. A device according to one of claims 2 and 3 wherein the nut blocking device has a mechanism for temporary release with a flexible blade (80) for removal of the tightening nut.

5. A device according to one of claims 2 to 4 wherein the tightening nut (56) is a knurled or notched nut.

6. A device according to claim 5 wherein the blocking device includes a flexible blade (80) connected to the latch (50) and provided with at least one lug (86) at a free end, the flexible blade having a rest position in which the lug is in engagement with a knurling (57) of the tightening nut, and a release position capable of being occupied under a bending stress and in which the lug is away from the knurling.

7. A device according to any one of the preceding claims wherein the first pivot which is provided with the axial lock of complementary shape comprises a groove (62) in the vicinity of an end of the pivot, and wherein the bolt which is adapted to cooperate with the groove (62) is formed by an edge (72) of an opening (66) in the latch in the vicinity of its first end (52).

8. A device according to claim 7 wherein the opening (66) has a first part which is sufficiently wide for the passage of the pivot, and a second part which is in communication with the first part of the opening, and adjusted to the bottom of the groove (62) of the pivot, the second part of the opening being configured to engage in the groove of the pivot when the second end of the latch (54) is engaged on the pivot provided with the axial lock for manual tightening.

9. A device according to any one of the preceding claims wherein the blade pivot (34) is provided with the axial lock for manual tightening and wherein the cam pivot (40) is provided with the axial lock of complementary shape.

10. A cutting tool comprising a pivoting blade (30) mounted on a blade pivot (34) and an actuating mechanism (16, 38) of the cutting blade (30) connected to a cam (36) of the cutting blade (30) by way of a cam pivot (40), **characterised by** a blade holding device according to any one of the preceding claims.
